# EUROPEAN PATENT SPECIFICATION

(11) **EP 3 154 744 B1**
(45) Date of publication and mention of the grant of the patent: **15.06.2022**
(21) Application number: 15729928.0
(22) Date of filing: 15.06.2015
(51) Int. Cl.: B23K 26/36, B23K 26/00

(54) **APPARATUS AND METHODS RELATING TO REDUCED PHOTOELECTRON YIELD AND/OR SECONDARY ELECTRON YIELD**
VORRICHTUNG UND VERFAHREN IM ZUSAMMENHANG MIT REDUZIERTER FOTOELEKTRONENAUSBEUTE UND/ODER SEKUNDÄRELEKTRONENAUSBEUTE
APPAREIL ET PROCÉDÉS ASSOCIÉS À UN RENDEMENT DE PRODUCTION DE PHOTOÉLECTRONS ET/OU À UN RENDEMENT DE PRODUCTION D'ÉLECTRONS SECONDAIRES RÉDUITS

(30) Priority: 13.06.2014 GB 201410593
(43) Date of publication of application: 19.04.2017
(73) Proprietor: United Kingdom Research and Innovation, Swindon SN2 1FL (GB)
(72) Inventor: VALIZADEH, Reza, Stockport Cheshire SK8 7HW (GB); MALYSHEV, Oleg, Knutsford Cheshire WA16 6NG (GB)
(74) Representative: Boult Wade Tennant LLP
(86) International application number: PCT/GB2015/051750
(87) International publication number: WO 2015/189645

(56) References cited:
- EP-A1- 1 586 405
- DE-A1-102005 043 495
- DE-A1-102011 111 998
- JP-A- 2010 142 862
- Oswald C Noël M V Bernard J Gröbner Scheuerlein Hilleret Taborelli Baglin Henrist Bojko ET AL: "The Secondary Electron Yield of Technical Materials and its Variation with Surface Treatments", , 23 September 2000 (2000-09-23), XP055217353, Retrieved from the Internet: URL:http://cds.cern.ch/record/466534
- N. BALCON ET AL: "Secondary Electron Emission on Space Materials: Evaluation of the Total Secondary Electron Yield From Surface Potential Measurements", IEEE TRANSACTIONS ON PLASMA SCIENCE, vol. 40, no. 2, 1 February 2012 (2012-02-01), pages 282-290, XP055217362, ISSN: 0093-3813, DOI: 10.1109/TPS.2011.2172636
- SCHANILOGLU ET AL.: "Minimizing surface plasmas in hugh power microwave sources", FINAL TECHNICAL REPORT, 1 January 2008 (2008-01-01),

## Description

This invention relates to methods for reducing photoelectron yield (PEY) and/or secondary electron yield (SEY) and, in other aspects, further relates to apparatus that may be made in accordance with such methods.

### BACKGROUND

Photoelectron emission (PEE) and secondary electron emission (SEE) are phenomena that negatively affect many kinds of apparatus including particle accelerators, radiofrequency (RF) waveguides, detectors and spacecraft. Photoelectrons are emitted when a photon collides with a surface and liberates an electron. Similarly, secondary electrons are emitted when a primary electron collides with a surface and liberates a secondary electron. Photoelectron yield (PEY) and secondary electron yield (SEY) are commonly used to characterize the PEE and SEE properties of a material, respectively, where PEY and SEY may be defined as the average emitted electrons per single incident photon or primary electron, respectively.

In particle accelerators, PEE and SEE can cause an electron cloud build-up and induce an increase in vacuum pressure, beam instability, beam losses, emittance growth, a reduction in the beam lifetime, or lead to additional heat loads on a cryogenic vacuum chamber. In RF waveguides, SEE can cause power loss, damages to the waveguide surface and limit the lifetime of the waveguide. The performance of detectors is also impeded by PEE and SEE since the photoelectrons and secondary electrons define the signal background and hence reduce the sensitivity of the detector. The charging of spacecraft by PPE and/or SEE is also known to present problems to the spacecraft, not least to equipment on board.

Due to the significance of PEE and SEE and the potential technological and economic benefits associated with reducing PEY and SEY, considerable effort has been applied to finding means to reduce the PEY and SEY of materials, including programs by the European Space Agency (ESA) and CERN.

Over decades, many methods have been employed which seek to reduce PEY and SEY. Such methods can be broadly classified as either modifying mechanical or material properties of a surface. Examples of existing reduced PEY and SEY surfaces (or "anti e-cloud surfaces") include those that have been mechanically machined to modify the topography of the surface, and surfaces having coatings which either seek to provide a different topography and/or a low-PEY/SEY material on the material surface. Another option is to use weak solenoidal fields to trap electrons and thereby reduce PEY and SEY.

*Minimizing Surface Plasmas in High Power Microwave Sources* by Schamiloglu et al, which forms the basis for the preamble of claim 1, describes modifying a copper surface using laser ablation. *The Secondary Electron Yield Of Technical Materials And Its Variation With Surface Treatments* by Baglin et al describes changing a surface roughness through a chemical reaction to deposit carbon or by the deposition of a strongly dendritic layer. *Secondary Electron Emission on Space Materials: Evaluation of the Total Secondary Electron Yield From Surface Potential Measurements* by Balcon et al describes that secondary electron yield varies with surface roughness, and performs experiments on samples with various roughness. EP 1 586 405 A1, DE 10 2005 043495 and JP 2010 142862 describe using lasers to form periodic structures.

Despite the many different methods proposed over the past few decades, PEY and SEY remain as problems in many areas and there is a significant on-going need to find new ways to reduce PEY and SEY further than is currently possible.

Certain aspects of the present invention seek to provide alternative and effective means for reducing PEY and/or SEY.

### BRIEF SUMMARY OF THE DISCLOSURE

In accordance with an aspect of the present invention there is provided a method of reducing the photoelectron yield (PEY) and/or the secondary electron yield (SEY) of at least part of an apparatus, comprising the steps of:
providing an apparatus; and
ablating material from a metal surface of the apparatus using a pulsed laser to produce an array of periodic structures in the metal surface and thereby reducing the PEY and/or SEY of the metal surface, wherein the array of periodic structures has a periodicity between 1 and 200 µm.

The present invention may be utilized for any apparatus in which PEY or SEY presents a problem or limitation on performance.

The metal surface may form at least part of an inner surface of a chamber that is substantially evacuated or is substantially filled with a chemically inert gas when the apparatus is in use.

The apparatus may be selected from one of: a vacuum chamber, a particle accelerator, a radio frequency (RF) waveguide, a detector, an apparatus including a detector, and a spacecraft.

An average laser energy fluence of the pulsed laser may be greater than the ablation threshold of the metal surface. In particular embodiments, an average laser energy fluence of the pulsed laser may be less than 200% of the ablation threshold of the metal surface, and optionally less than 150%, 125% or 110% of the ablation threshold of the metal surface.

Additionally or alternatively, the enthalpy per laser pulse (or the accumulative effect of multiple pulses on a single spot) may be high enough to heat the metal from its initial temperature (e.g. room temperature), through fusion to evaporation.

The pulsed laser pulses may be of a duration between 500 fs and 500 ns inclusive, and optionally between 5 ns and 25 ns inclusive.

The pulsed laser is operated at an intensity between 0.1 × 10⁹ W/cm² and 0.5 × 10⁹ W/cm² inclusive, and optionally between 0.2 × 10⁹ and 0.4 × 10⁹ W/cm² inclusive. In preferable embodiments, the intensity of the pulse should be high enough to produce plasma.

The metal forming the metal surface may be selected from one of: copper, aluminium, stainless steel, and titanium. In other embodiments, the metal may be an alloy.

The pulsed laser may be a solid-state laser, optionally based on Nd:YVO₄ or Nd:YAG, or a pulsed fibre laser, optionally based on Yb, Tm, or Nd.

The metal surface having the array of periodic structures may have an absorbance of at least 75%, 80%, or 85% in the wavelength range 1 nm to 0.1 mm. In particular embodiments, the metal surface having the array of periodic structures may have an absorbance between 85% and 95% inclusive in the wavelength range 1 nm to 0.1 mm.

The step of ablating material from the metal surface may include scanning the pulsed laser across the metal surface to produce a series of peaks and/or grooves in the metal surface. The laser may be scanned across the surface along any one or more directions.

In certain embodiments, the series of peaks and/or grooves may be substantially parallel to one another. In particular, the series of peaks and/or grooves may include a first set of peaks and/or grooves extending along a first axis and a second set of peaks and/or grooves extending along a second axis that is substantially orthogonal to the first axis such that the first set of peaks and/or grooves intersect the second set of peaks and/or grooves to form a cross-hatched array.

The array of periodic structures has a periodicity between 1 and 200 µm and optionally between 10 and 100 µm along a single direction.

The step of ablating material from the metal surface may be performed in the presence of reactive gas such that the metal of the surface of metal is caused to chemically react with the reactive gas. The reactive gas may be chosen so that the reaction between the metal and the reactive gas forms a carbide or a nitride. In certain embodiments, the reactive gas may be or contains a hydrocarbon (e.g. methane) or may be or contains trihydrogen nitride.

The reactive gas may be the predominant gas at the metal surface during the step of ablating material from the metal surface. The reactive gas may be substantially the only gas at the metal surface during the step of ablating material from the metal surface.

Ablation of the metal surface may cause a reduction in the maximum δₘₐₓ of the PEY/SEY function δ(E) of the metal surface of at least 40%.

After ablation of the metal surface, the maximum δₘₐₓ of the SEY function δ(E) of the metal surface may be 1.45 or less. After ablation of the metal surface and further photon or electron bombardment in vacuum , the maximum δₘₐₓ of the SEY function δ(E) of the metal surface may be 1 or less.

The present invention may be practiced to provide a vacuum chamber comprising at least one metal surface defining at least part of an inner surface of the vacuum chamber, wherein the at least one metal surface includes an array of laser ablated periodic structures therein.

The array of laser ablated periodic structures may comprise a series of peaks and/or grooves in the at least one metal surface. The series of peaks and/or grooves may be substantially parallel to one another. Alternatively, the series of peaks and/or grooves may include a first set of peaks and/or grooves extending along a first axis and a second set of peaks and/or grooves extending along a second axis that is substantially orthogonal to the first axis such that the first set of peaks and/or grooves intersect the second set of peaks and/or grooves to form a cross-hatched array.

The array of laser ablated periodic structures will have a periodicity between 1 and 200 µm and optionally between 10 and 100 µm along a single direction.

The at least one metal surface may include a carbide- or nitride-containing region.

The maximum δₘₐₓ of the SEY function δ(E) of the at least one metal surface may be 1.45 or less, or optionally 1 or less.

The present invention may be practiced to provide a particle accelerator including a vacuum chamber as defined above.

The present invention may be practiced to provide a radio frequency (RF) waveguide comprising at least one metal surface defining at least part of an inner surface of the RF waveguide, wherein the at least one metal surface includes an array of laser ablated periodic structures therein.

The array of laser ablated periodic structures may comprise a series of peaks and/or grooves in the at least one metal surface. The series of peaks and/or grooves may be substantially parallel to one another. Alternatively, the series of peaks and/or grooves may include a first set of peaks and/or grooves extending along a first axis and a second set of peaks and/or grooves extending along a second axis that is substantially orthogonal to the first axis such that the first set of peaks and/or grooves intersect the second set of peaks and/or grooves to form a cross-hatched array.

The array of laser ablated periodic structures will have a periodicity between 1 and 200 µm and optionally between 10 and 100 µm along a single direction.

The at least one metal surface may include a carbide- or nitride-containing region.

The maximum δₘₐₓ of the SEY function δ(E) of the at least one metal surface may be 1.45 or less, or optionally 1 or less.

The present invention may be practiced to provide an apparatus including a detector, the apparatus comprising at least one metal surface, wherein the at least one metal surface includes an array of laser ablated periodic structures therein.

The array of laser ablated periodic structures may comprise a series of peaks and/or grooves in the at least one metal surface. The series of peaks and/or grooves may be substantially parallel to one another. Alternatively, the series of peaks and/or grooves may include a first set of peaks and/or grooves extending along a first axis and a second set of peaks and/or grooves extending along a second axis that is substantially orthogonal to the first axis such that the first set of peaks and/or grooves intersect the second set of peaks and/or grooves to form a cross-hatched array.

The array of laser ablated periodic structures will have a periodicity between 1 and 200 µm and optionally between 10 and 100 µm along a single direction.

The at least one metal surface may include a carbide- or nitride-containing region.

The maximum δₘₐₓ of the SEY function δ(E) of the at least one metal surface may be 1.45 or less, or optionally 1 or less.

The at least one metal surface may form part of the detector.

The present invention may be practiced to provide a spacecraft comprising at least one metal surface, wherein the at least one metal surface includes an array of laser ablated periodic structures therein.

The array of laser ablated periodic structures may comprise a series of peaks and/or grooves in the at least one metal surface. The series of peaks and/or grooves may be substantially parallel to one another. Alternatively, the series of peaks and/or grooves may include a first set of peaks and/or grooves extending along a first axis and a second set of peaks and/or grooves extending along a second axis that is substantially orthogonal to the first axis such that the first set of peaks and/or grooves intersect the second set of peaks and/or grooves to form a cross-hatched array.

The array of laser ablated periodic structures will have a periodicity between 1 and 200 µm and optionally between 10 and 100 µm along a single direction.

The at least one metal surface may include a carbide- or nitride-containing region.

The maximum δₘₐₓ of the PEY/SEY function δ(E) of the at least one metal surface may be 1.45 or less, or optionally 1 or less.

The at least one metal surface may form at least part of an external surface of the spacecraft.

Additionally or alternatively, the at least one metal surface may form at least part of an internal device in the spacecraft.

Although not claimed, there is also provided a method of reducing the photoelectron yield (PEY) and/or the secondary electron yield (SEY) of a metal surface, comprising the steps of:
providing a metal surface; and
ablating material from a metal surface of the apparatus using a pulsed laser to produce an array of periodic structures in the metal surface and thereby reducing the PEY and/or SEY of the metal surface
wherein the step of ablating material from the metal surface is performed in the presence of reactive gas such that the metal of the surface of metal is caused to chemically react with the reactive gas.

The metal surface may form part of a vacuum chamber, a particle accelerator, a radio frequency (RF) waveguide, a detector, an apparatus including a detector, or a spacecraft.

An average laser energy fluence of the pulsed laser may be greater than the ablation threshold of the metal surface. An average laser energy fluence of the pulsed laser may be less than 200% of the ablation threshold of the metal surface, and optionally less than 150%, 125% or 110% of the ablation threshold of the metal surface.

Additionally or alternatively, the enthalpy per laser pulse (or the accumulative effect of multiple pulses on a single spot) may be high enough to heat the metal from its initial temperature (e.g. room temperature), through fusion to evaporation.

The pulsed laser pulses may be of a duration between 500 fs and 500 ns inclusive, and optionally between 5 ns and 25 ns inclusive.

The pulsed laser is operated at an intensity between 0.1 × 10⁹ W/cm² and 0.5 × 10⁹ W/cm² inclusive, and optionally between 0.2 × 10⁹ and 0.4 × 10⁹ W/cm² inclusive. Preferably, the intensity of the pulse should be high enough to produce plasma.

The metal forming the metal surface may be selected from one of: copper, aluminium, stainless steel, and titanium. In other embodiments, the metal may be an alloy.

The pulsed laser may be a solid-state laser, optionally based on Nd:YVO₄ or Nd:YAG, or a pulsed fibre laser, optionally based on Yb, Tm, or Nd.

The metal surface having the array of periodic structures may have an absorbance of at least 75%, 80%, or 85% in the wavelength rage 1 nm to 0.1 mm. The metal surface having the array of periodic structures may have an absorbance between 85% and 95% inclusive in the wavelength range 1 nm to 0.1 mm.

The step of ablating material from the metal surface may include scanning the pulsed laser across the metal surface to produce a series of peaks and/or grooves in the metal surface. The laser may be scanned across the surface along any one or more directions.

The series of peaks and/or grooves may be substantially parallel to one another. In particular, the series of peaks and/or grooves may include a first set of peaks and/or grooves extending along a first axis and a second set of peaks and/or grooves extending along a second axis that is substantially orthogonal to the first axis such that the first set of peaks and/or grooves intersect the second set of peaks and/or grooves to form a cross-hatched array.

The array of periodic structures may have a periodicity between 1 and 200 µm and optionally between 10 and 100 µm along a single direction.

The reactive gas may be chosen so that the reaction between the metal and the reactive gas forms a carbide or a nitride. The reactive gas may be or contains a hydrocarbon (e.g. methane) or may be or contains trihydrogen nitride.

The reactive gas may be the predominant gas at the metal surface during the step of ablating material from the metal surface. The reactive gas may be substantially the only gas at the metal surface during the step of ablating material from the metal surface.

Ablation of the metal surface may cause a reduction in the maximum δₘₐₓ of the PEY/SEY function δ(E) of the metal surface of at least 40%.

After ablation of the metal surface, the maximum δₘₐₓ of the SEY function δ(E) of the metal surface may be 1.45 or less. After ablation of the metal surface and further photon or electron bombardment in vacuum, the maximum δₘₐₓ of the SEY function δ(E) of the metal surface may be 1 or less.

### BRIEF DESCRIPTION OF THE DRAWINGS

Embodiments of the invention are further described hereinafter with reference to the accompanying drawings, in which:
Figure 1 is a schematic diagram of an experimental setup used to measure secondary electron yield (SEY);
Figure 2 shows SEY measurements for various copper samples treated in accordance with an embodiment of the present invention;
Figure 3 shows SEY measurements for various stainless steel samples treated in accordance with an embodiment of the present invention;
Figure 4 shows SEY measurements for various aluminium samples treated in accordance with an embodiment of the present invention;
Figure 5 shows the maximum SEY as a function of electron dose for various copper, stainless steel and aluminium samples; and
Figure 6 shows a table summarizing the results of δₘₐₓ and Eₘₐₓ for various copper, stainless steel and aluminium samples.

### DETAILED DESCRIPTION

In one aspect of the invention, there is provided a method of reducing the photoelectron yield (PEY) and/or the secondary electron yield (SEY) of part of an apparatus. Such a method may be applied to any apparatus where SEY presents a problem, for example to the performance or longevity of the apparatus. In certain embodiments, the apparatus to which the method may be applied may be a vacuum chamber (e.g. which may form part of a particle accelerator), a chamber for containing a chemically inert gas, a particle accelerator, a radio frequency (RF) waveguide, a detector, any apparatus that includes a detector, or a spacecraft.

It is found that SEY may be significantly reduced by ablating material from a metal surface of the apparatus using a pulsed laser to produce an array of periodic structures in the metal surface. As such, the present invention allows the use of such a method to modify existing apparatus to reduce SEY as well as using the method during the manufacture of such apparatus. The method is particularly suited for in-situ application and therefore offers an extremely attractive and effective means for reducing SEY in existing apparatus, such as large particle accelerators, where alternative prior art methods may be impractical and/or prohibitively costly and/or not as effective.

The following experimental example illustrates certain embodiments of the present invention and demonstrates the effectiveness of the method of the present invention in reducing SEY in copper, aluminium, and 316L stainless steel. The metals were provided as foils with a purity of 99.999% and 1 mm thickness with electro-polished surfaces. Prior to laser exposure, the samples were degreased and UHV standard cleaned. A Nd:YVO₄ laser with a maximum average power of 20 W at a wavelength of 1064 nm was used to irradiate the aluminium and stainless steel samples in an argon atmosphere at room temperature, and a Nd:YVO₄ laser with a maximum average power of 10 W at a wavelength of 532 nm was used to irradiate the copper sample. For each sample, the laser was pulsed (pulse duration of 12 ns) operating at repetition rate f = 30 kHz, with an average laser energy fluence that was just above the ablation threshold of each of the metals. The laser beam was raster scanned over the surface of each of the samples in both a horizontal and vertical direction, where the laser was controlled using a computer-controlled scanner system. As a result, an array of periodic structures was formed in each of the samples. The presence of the highly organised microstructures of the array lead to the highly reflective sample metals becoming dark or black in appearance. This effect is caused by the array increasing the absorption of electromagnetic radiation typically to around 80-95% in the ultraviolet to infrared range (i.e. in a wavelength range of about 1 nm to 0.1 mm).

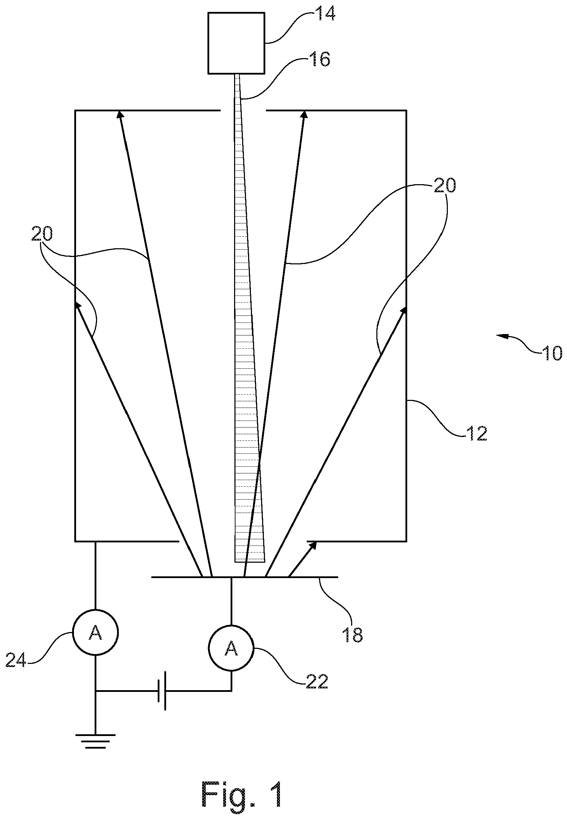

SEY measurements were carried out on the laser modified samples to characterize the effects of the arrays on secondary electron emission (SEE). The SEY measurements were carried out on a dedicated system 10 (shown schematically in Figure 1) which included a Faraday cup 12 and a low energy electron gun 14 capable of operating at 10-1000 eV. The sample 18 formed an intricate part of the Faraday cup 12 but at the same time was electrically isolated from the Faraday cup 12 to allow each part to be measured independently. A negative bias voltage (-18 V) was applied to the sample 18 with respect to the Faraday cup 12 which was held at ground, and a primary electron beam 16 was emitted from the electron gun 14 and directed towards the sample 18. The sample 18 emitted secondary electrons 20 due to the bombardment by the primary electron beam 16. The negative bias voltage caused secondary electrons 20 emitted from the sample 18 to be repelled from the Faraday cup 12. A first ammeter 22 was used to measure the current at the sample 18 and a second ammeter 24 was used to measure the current at the Faraday cup 12.

The total SEY, δ, is defined as the ratio of secondary electrons 20 leaving the sample surface (I_{F}) to the number of incident electrons (I_{g}): δ = I_{F}/I_{g} = I_{F}/(I_{F} + I_{S}), where I_{S} is the current measured on the negatively biased sample 18 (e.g. as measured by first ammeter 22).

The SEY measurement was carried out with the electron beam 16 at normal incidence and an area of 0.28 cm² at the sample 18 at various energies ranging from 80 to 1000 eV with a current of a few tens of nA in order to minimize conditioning effects during data acquisition. A separate electron gun (not shown) was operated at 495 eV over a relatively large area (1.5 cm²) to simulate a scrubbing effect for each sample (so-called "conditioning").

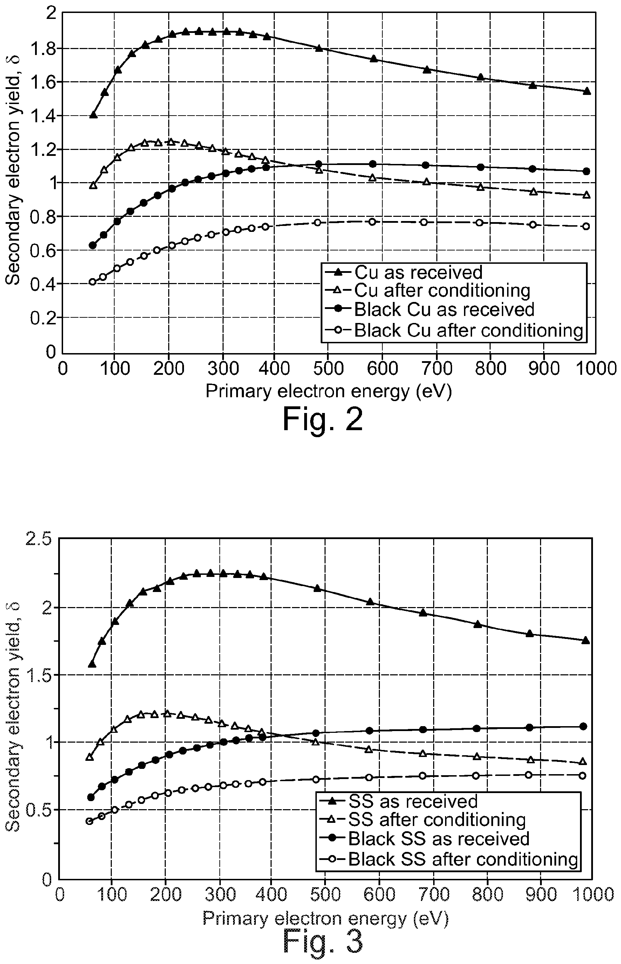

Figures 2 to 4 show the SEY results (as a function of primary electron energy) for copper, stainless steel and aluminium samples, respectively, both before and after (labeled "black") laser treatment and before ("as received") and after scrubbing ("after conditioning"). The dependencies shown in Figures 2 to 4 can be described in terms of a maximum value of SEY, δₘₐₓ = max(δ(E)), measured at corresponding primary electron energy Eₘₐₓ.

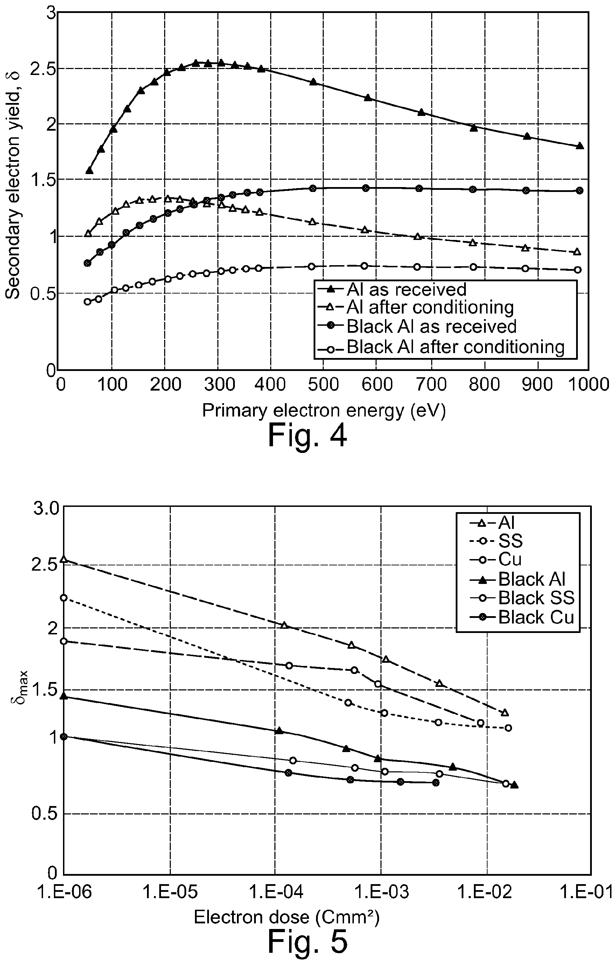

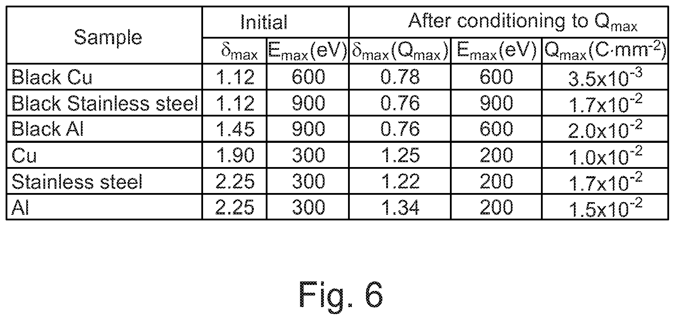

Each of Figures 2 to 4 shows that δₘₐₓ is reduced by almost a factor of 2 by the laser treatment of each sample. Figure 5 shows δₘₐₓ for each sample as a function of electron dose. Figure 6 shows a table summarizing the results of δₘₐₓ and Eₘₐₓ for the as received ("initial") and conditioned samples (for both black and non-laser treated).

The astonishingly low value for δₘₐₓ for the as received samples is only due to the modified surface topography resulting from the laser ablation leading to surface structuring. Indeed, chemical analysis shows that the surface chemistry is not necessarily changed by the laser treatment in the as received samples.

These results are believed to be the lowest as-received δₘₐₓ in comparison with existing prior art results with the exception of a method involving plasma sprayed boron carbide which has reportedly produced a value of δₘₐₓ = 0.55.

With regards to the mechanism by which the laser treatment leads to the formation of the periodic structures, it is understood that successive pulses of the laser causes a buildup of energy that leads to ablation and vaporization taking place at the center of a melt pool in the material (which is above the ablation threshold of the material) with concomitant build-up of backpressure ejecting the melt laterally. This could be enhanced by plasma formation, originating from laser coupling with the vapour plume and the plasma shock wave impinging on the molten surface. Formation of plasma in the center of the beam results in a high thermal gradient between the spot center and the outer spot diameter. The hydrodynamic expansion of the ablated material creates an extended density profile where the laser energy is absorbed. At the periphery of the beam, melting is occurring instead.

Certain aspects of the present invention include methods for reducing the PEY and/or SEY in part of an apparatus by ablating material with a pulsed laser to produce an array of periodic structures whereby the formation of the periodic structures is due to the above-described mechanism. Any suitable metal capable of being treated in this manner may be used, including alloys. Non-limiting examples of suitable metals include copper, aluminium, stainless steel, titanium, and alloys incorporating such metals.

In certain embodiments, the average laser energy fluence of the pulsed laser is greater than the ablation threshold of the metal surface being treated. In some embodiments, the average laser energy fluence of the pulsed laser may be less than 200% of the ablation threshold of the metal surface. In preferable embodiments, the average laser energy fluence of the pulsed laser may be just above the ablation threshold of the metal surface and may be less than 150%, 125% or 110% of the ablation threshold of the metal surface. The pulse duration of the pulsed laser may be between 500 fs and 500 ns in certain embodiments. In particular embodiments, the pulse duration of the pulsed laser may be between 5 ns and 25 ns, and/or in certain preferable embodiments the pulse duration is 10 ns or less. In certain embodiments the laser may be a solid-state bulk laser (e.g. based on Nd:YVO₄ or Nd:YAG) or a fibre laser (e.g. based on Yb, Tm or Nd) and/or may operate at an intensity of between 0.1 × 10⁹ W/cm² and 0.5 × 10⁹ W/cm², and optionally between 0.2 × 10⁹ and 0.4 × 10⁹ W/cm². The laser may operate with a wavelength in the range 200 nm to 1.2 µm, and in specific examples may have a wavelength of 355 nm, 532 nm or 1064 nm. The absorption and/or transmission spectra for the metal may first be measured (e.g. by using a spectrophotometer) in order to best determine the most suitable laser and operating parameters (e.g. wavelength, pulse duration, intensity).

In preferable embodiments, the metal surface having the array of periodic structures has an absorbance of at least 75%, 80%, or 85% in the wavelength range 1 nm to 0.1 mm. In a particularly preferable embodiment, the metal surface having the array of periodic structures has an absorbance between 85% and 95% inclusive in the wavelength range 1 nm to 0.1 mm.

The step of ablating material from the metal surface may preferably include scanning the pulsed laser across the metal surface to produce a series of peaks and/or grooves in the metal surface. In some embodiments, the series of peaks and/or grooves are substantially parallel to one another. In other embodiments, the series of peaks and/or grooves includes a first set of peaks and/or grooves extending along a first axis and a second set of peaks and/or grooves extending along a second axis that is substantially orthogonal to the first axis such that the first set of peaks and/or grooves intersect the second set of peaks and/or grooves to form a cross-hatched array.

The array of periodic structures have a periodicity between 1 and 200 µm and optionally between 10 and 100 µm along a single direction.

The above-described methods therefore offer a very viable solution for reducing PEY and/or SEY in an apparatus. A significant advantage of the method of the present invention over current prior art methods is that the method of the present invention is readily scalable to large areas and, perhaps more importantly, usable on 3D geometries. Significantly, it can easily be applied to existing apparatus with minimal disturbance. Consequently, the method may be utilized in situ on apparatus such as particle accelerators where a vacuum chamber may be treated with minimal disturbance to the beam line.

In some embodiments, the laser ablation may be carried out in air or an inert gaseous environment at atmospheric pressure. The modified surface resulting from the embodiments of the method of the present invention is highly reproducible and offers a very stable surface chemistry which can be influenced during the treatment process. The surface is robust and is immune to any surface delamination which can be a detrimental problem associated with prior art methods involving thin film coating. In certain embodiments of the present invention, the treated surface remains the same material and is therefore unlikely to cause any effect on surface impedance.

The advantages associated with the present invention are especially surprising given the technical prejudice associated with increasing the roughness of vacuum chamber surfaces and waveguide surfaces. Indeed, roughening is generally seen to be detrimental to performance as it increases losses in waveguides and leads to an increase in surface area which increases outgassing in vacuum environments. The present invention is capable of providing such significant benefits with regards to a reduction in PEY and/or SEY that any downsides associated with increasing roughness (by way of the array of periodic structures) are likely to be seen as negligible or an acceptable trade-off.

Nevertheless, in certain embodiments of the present invention, the surface chemistry may simultaneously be modified during the ablation process, thereby reducing PEY and/or SEY further. In particular, the step of ablating material from the metal surface may be performed in the presence of reactive gas such that the surface of metal is caused to chemically react with the reactive gas. The reactive gas may be chosen so that the reaction between the metal and the reactive gas forms a carbide or a nitride. In a specific embodiment, the reactive gas may be or contain a hydrocarbon (e.g. methane) or may be or contain trihydrogen nitride. The reactive gas is preferably the predominant gas at the metal surface during the step of ablating material from the metal surface. In particularly preferable embodiments, the reactive gas is substantially the only gas at the metal surface during the step of ablating material from the metal surface.

In any embodiment, the ablation of the metal surface preferably causes a reduction in the maximum δₘₐₓ of the SEY function δ(E) of the metal surface of at least 40%.

In any embodiment, after ablation of the metal surface, the maximum δₘₐₓ of the SEY function δ(E) of the metal surface is preferably 1.45 or less, or, further preferably, 1 or less.

Whilst the present invention is not limited to such, the following further examples demonstrate suitable operating parameters for performing methods in accordance with the present invention.

### Example 1

Target material: steel
Laser: Nd:YAG, 1064 nm
Laser intensity: -0.3 × 10⁹ W/cm²
Laser pulse duration: 7 ns

### Example 2

Target material: copper
Laser: Nd:YVO₄, 532 nm
Laser intensity: ∼0.21 × 10⁹ W/cm²
Laser pulse duration: 12 ns

### Example 3

Target material: titanium
Laser: Nd:YVO₄, 1064 nm
Laser pulse duration: 8 ns

## Claims

1. A method of reducing the photoelectron yield (PEY) and/or the secondary electron yield (SEY) of at least part of an apparatus, comprising the steps of:
providing an apparatus; and **characterised by**
ablating material from a metal surface of the apparatus using a pulsed laser to produce an array of periodic structures in the metal surface and thereby reducing the PEY and/or SEY of the metal surface, wherein the array of periodic structures has a periodicity between 1 and 200 µm.

2. The method according to claim 1, wherein the array of periodic structures has a periodicity between 10 and 100 µm along a single direction.

3. The method according to claim 1 or 2, wherein the step of ablating material from the metal surface includes scanning the pulsed laser across the metal surface to produce a series of peaks and/or grooves in the metal surface; and optionally:
wherein the series of peaks and/or grooves are substantially parallel to one another; or
wherein the series of peaks and/or grooves includes a first set of peaks and/or grooves extending along a first axis and a second set of peaks and/or grooves extending along a second axis that is substantially orthogonal to the first axis such that the first set of peaks and/or grooves intersect the second set of peaks and/or grooves to form a cross-hatched array.

4. The method according to any preceding claim, wherein the pulsed laser pulses are of a duration between 500 fs and 500 ns inclusive, and optionally between 5 ns and 25 ns inclusive; and/or
wherein the pulsed laser is operated at an intensity between 0.1 × 10⁹ W/cm² and 0.5 × 10⁹ W/cm² inclusive, and optionally between 0.2 × 10⁹ and 0.4 × 10⁹ W/cm² inclusive; and/or
wherein the metal forming the metal surface is selected from one of: copper, aluminium, stainless steel, and titanium; and/or
wherein the pulsed laser is a solid-state laser, optionally based on Nd:YVO₄ or Nd:YAG, or a pulsed fibre laser, optionally based on Yb, Tm, or Nd.

5. The method according to any preceding claim, wherein an average laser energy fluence of the pulsed laser is greater than the ablation threshold of the metal surface; and optionally
wherein an average laser energy fluence of the pulsed laser is less than 200% of the ablation threshold of the metal surface, and optionally less than 150%, 125% or 110% of the ablation threshold of the metal surface.

6. The method according to any preceding claim, wherein the metal surface forms at least part of an inner surface of a chamber that is substantially evacuated or is substantially filled with a chemically inert gas when the apparatus is in use.

7. The method according to any preceding claim, wherein the apparatus is selected from one of: a vacuum chamber, a particle accelerator, a radio frequency (RF) waveguide, a detector, an apparatus including a detector, and a spacecraft.

8. The method according to any preceding claim, wherein the step of ablating material from the metal surface is performed in the presence of reactive gas such that the metal of the surface of metal is caused to chemically react with the reactive gas.

9. The method according to claim 8, wherein the reactive gas is or contains a hydrocarbon or is or contains trihydrogen nitride.

## Patentansprüche

1. Verfahren zur Reduzierung der Photoelektronen-Ausbeute (PEY) und/oder der sekundären Elektronenausbeute (SEY) von zumindest einem Teil einer Vorrichtung, wobei das Verfahren die folgenden Schritte umfasst:
Bereitstellung einer Vorrichtung; und **gekennzeichnet durch**:
Abtragen von Material von einer Metalloberfläche der Vorrichtung unter Verwendung eines gepulsten Lasers, um eine Anordnung periodischer Strukturen in der Metalloberfläche zu erzeugen, und dadurch die PEY und/oder SEY der Metalloberfläche zu reduzieren, wobei die Anordnung von periodischen Strukturen eine Periodizität zwischen 1 und 200 µm aufweist.

2. Verfahren nach Anspruch 1, wobei die Anordnung periodischer Strukturen eine Periodizität zwischen 10 und 100 µm entlang einer Richtung aufweist.

3. Verfahren nach Anspruch 1 oder 2, wobei der Schritt des Abtragens von Material von der Metalloberfläche das Abtasten des gepulsten Lasers über die Metalloberfläche einschließt, um eine Reihe von Peaks und/oder Rillen in der Metalloberfläche zu erzeugen; und optional:
wobei die Reihe von Peaks und/oder Rillen im Wesentlichen parallel zueinander sind; oder
wobei die Reihe von Peaks und/oder Rillen eine erste Gruppe von Peaks und/oder Rillen aufweist, welche sich entlang einer ersten Achse erstreckt, und eine zweite Gruppe von Peaks und/oder Rillen, welche sich entlang einer zweiten Achse erstreckt, welche im Wesentlichen orthogonal zur ersten Achse ist, so dass die erste Gruppe von Peaks und/oder Rillen die zweite Gruppe von Peaks und/oder Rillen überkreuzt, um eine kreuzschraffierte Anordnung zu bilden.

4. Verfahren nach einem der vorhergehenden Ansprüche, wobei die Impulse des gepulsten Lasers eine Dauer von zwischen 500 fs und 500 ns inklusive, und optional von zwischen 5 ns und 25 ns inklusive aufweisen; und/oder
wobei der gepulste Laser bei einer Intensität zwischen 0,1 × 10⁹W/cm² und 0,5 × 10⁹W/cm² inklusive betrieben wird, und optional zwischen 0,2 × 10⁹ und 0,4 × 10⁹W/cm² inklusive; und/oder
wobei das die Metalloberfläche bildende Metall aus der folgenden Gruppe ausgewählt wird: Kupfer, Aluminium, Edelstahl, und Titan; und/oder
wobei der gepulste Laser ein Festkörperlaser, optional auf der Grundlage von Nd:YVO₄ oder Nd:YAG ist, oder ein gepulster Faserlaser, optional auf der Grundlage von Yb, Tm oder Nd.

5. Verfahren nach einem der vorhergehenden Ansprüche, wobei eine durchschnittliche Laser-Energiefluenz des gepulsten Lasers größer ist als die Abtragsschwelle der Metalloberfläche; und optional
wobei eine durchschnittliche Laser-Energiefluenz des gepulsten Lasers weniger als 200 % der Abtragsschwelle der Metalloberfläche beträgt, und optional weniger als 150 %, 125 % oder 110 % der Abtragsschwelle der Metalloberfäche beträgt.

6. Verfahren nach einem der vorhergehenden Ansprüche, wobei die Metalloberfläche zumindest Teil einer Innenfläche einer Kammer bildet, welche im Wesentlichen luftleer ist oder im Wesentlichen mit einem chemisch trägen Gas gefüllt ist, wenn die Vorrichtung im Einsatz ist.

7. Verfahren nach einem der vorhergehenden Ansprüche, wobei die Vorrichtung aus der folgenden Gruppe ausgewählt wird: einer Unterdruckkammer, einem Teilchenbeschleuniger, einem Radiofrequenz (RF)-Wellenleiter, einem Detektor, einer einen Detektor umfassenden Vorrichtung, und einem Raumfahrzeug.

8. Verfahren nach einem der vorhergehenden Ansprüche, wobei der Schritt des Abtragens von Material von der Metalloberfläche im Beisein von reaktivem Gas ausgeführt wird, so dass das Metall der Metalloberfläche dazu veranlasst wird, mit dem reaktiven Gas chemisch zu reagieren.

9. Verfahren nach Anspruch 8, wobei das reaktive Gas Kohlenwasserstoff ist oder enthält oder Trihydrogennitrid ist oder enthält.

## Revendications

1. Procédé de réduction du rendement photoélectronique (PEY) et/ou du rendement d'électrons secondaires (SEY) d'au moins une partie d'un appareil, comprenant l'étape consistant à :
fournir un appareil ; et **caractérisé par** les étapes consistant en
l'enlèvement d'un matériau d'une surface métallique de l'appareil en utilisant un laser pulsé pour produire un réseau de structures périodiques dans la surface métallique et ainsi la réduction du PEY et/ou du SEY de la surface métallique, où le réseau de structures périodiques a une périodicité comprise entre 1 et 200 µm.

2. Procédé selon la revendication 1, dans lequel le réseau de structures périodiques a une périodicité comprise entre 10 et 100 µm le long d'une seule direction.

3. Procédé selon la revendication 1 ou 2, dans lequel l'étape consistant à enlever un matériau de la surface métallique comporte le balayage du laser pulsé à travers la surface métallique pour produire une série de crêtes et/ou de rainures dans la surface métallique ; et facultativement :
dans lequel la série de crêtes et/ou de rainures sont sensiblement parallèles entre elles ; ou
dans lequel la série de crêtes et/ou de rainures comporte un premier ensemble de crêtes et/ou de rainures s'étendant le long d'un premier axe et un deuxième ensemble de crêtes et/ou de rainures s'étendant le long d'un deuxième axe qui est sensiblement orthogonal au premier axe de sorte que le premier ensemble de crêtes et/ou de rainures croise le deuxième ensemble de crêtes et/ou de rainures pour former un réseau hachuré.

4. Procédé selon l'une des revendications précédentes, dans lequel les impulsions laser pulsé sont d'une durée comprise entre 500 fs et 500 ns inclus, et facultativement entre 5 ns et 25 ns inclus ; et/ou
dans lequel le laser pulsé fonctionne à une intensité comprise entre 0,1 × 10⁹ W/cm² et 0,5 × 10⁹ W/cm² inclus, et facultativement entre 0,2 × 10⁹ et 0,4 × 10⁹ W/cm² inclus ; et/ou
dans lequel le métal formant la surface métallique est choisi parmi : le cuivre, l'aluminium, l'acier inoxydable, et le titane ; et/ou
dans lequel le laser pulsé est un laser à solide, facultativement à base de Nd:YVO₄ ou Nd:YAG, ou un laser à fibre pulsé, facultativement à base de Yb, Tm ou Nd.

5. Procédé selon l'une des revendications précédentes, dans lequel une fluence énergétique de laser moyenne du laser pulsé est supérieure au seuil d'enlèvement de la surface métallique ; et facultativement
dans lequel une fluence énergétique de laser moyenne du laser pulsé est inférieure à 200 % du seuil d'enlèvement de la surface métallique, et facultativement inférieure à 150 %, 125 % ou 110 % du seuil d'enlèvement de la surface métallique.

6. Procédé selon l'une des revendications précédentes, dans lequel la surface métallique forme au moins une partie d'une surface interne d'une chambre qui est sensiblement évacuée ou qui est sensiblement remplie d'un gaz chimiquement inerte lorsque l'appareil est en cours d'utilisation.

7. Procédé selon l'une des revendications précédentes, dans lequel l'appareil est choisi parmi : une chambre à vide, un accélérateur de particules, un guide d'ondes de radiofréquence (RF), un détecteur, un appareil comportant un détecteur, et un engin spatial.

8. Procédé selon l'une des revendications précédentes, dans lequel l'étape consistant à enlever un matériau de la surface métallique est effectuée en présence de gaz réactif de sorte que le métal de la surface de métal soit amené à réagir chimiquement avec le gaz réactif.

9. Procédé selon la revendication 8, dans lequel le gaz réactif est ou contient un hydrocarbure ou est ou contient du nitrure de trihydrogène.
